**Europäisches Patentamt**

**European Patent Office**

**Office européen des brevets**

(19)

(11) Veröffentlichungsnummer: **0 103 699**

**B1**

(12) **EUROPÄISCHE PATENTSCHRIFT**

(45) Veröffentlichungstag der Patentschrift:
26.11.86

(21) Anmeldenummer: 83107208.7

(22) Anmeldetag: 22.07.83

(51) Int. Cl.⁴: **A 22 C 13/00**

(54) **Einschichtige elastische Schlauchfolie aus Polyamid zur Verpackung von pastösen Stoffen, insbesondere Lebensmitteln, die heiss verpackt werden oder nach dem Abpacken einer Hitzebehandlung unterworfen werden und Verfahren zu ihrer Herstellung.**

(30) Priorität: 27.07.82 DE 3227945

(43) Veröffentlichungstag der Anmeldung:
28.03.84 Patentblatt 84/13

(45) Bekanntmachung des Hinweises auf die Patenterteilung:
26.11.86 Patentblatt 86/48

(84) Benannte Vertragsstaaten:
AT BE CH DE FR GB LI LU NL SE

(56) Entgegenhaltungen:
EP-A-0 006 528
DE-A-2 724 252
FR-A-2 441 558

(73) Patentinhaber: Naturin- Werk Becker & Co.,
Badeniastrasse 13, D-6940 Weinheim/Bergstrasse
(DE)

(72) Erfinder: Erk, Gayyur, Dr.- Ing., Lärchenweg 11,
D-6941 Gorxheimertal (DE)
Erfinder: Korlatzki, Rudi, Ing. grad., Danziger
Strasse 12, D-6941 Laudenbach/Bergstrasse (DE)

(74) Vertreter: Klöpsch, Gerald, Dr.- Ing., An Gross St.
Martin 6, D-5000 Köln 1 (DE)

## Beschreibung

Die Erfindung betrifft eine einschichtige elastische Schlauchfolie aus Polyamid zur Verpackung von pastösen Stoffen, insbesondere Lebensmitteln, die heiß verpackt werden oder nach dem Abpacken einer Hitzebehandlung unterworfen werden und Verfahren zu ihrer Herstellung. Insbesondere betrifft die Erfindung eine Schlauchfolie, die als Wursthülle für Koch- und Brühwürste dient, daneben auch zur Verpackung von im schmelzflüssigen Zustand abgepackter Waren wie Schmelzkäse.

An derartige Schlauchfolien, insbesondere wenn sie als Wursthüllen für Brüh- und Kochwürste verwendet werden, werden sehr vielseitige Anforderungen gestellt, die sich zum Teil sogar gegenseitig ausschließen. Verzichtet man auf die Bedingung der Rauchdurchlässigkeit, so sind Schlauchfolien aus thermoplastischen Kunststoffen in der Lage, die meisten dieser Anforderungen zu erfüllen, nämlich Preiswürdigkeit, problemlose Verarbeitbarkeit, geringe Durchlässigkeit für Gase, Wasserdampf und unerwünschte Keime. Bis heute sind jedoch fast alle als Wursthüllen verwendete Schlauchfolien aus thermoplastischen Kunststoffen mit dem Nachteil behaftet, daß sie nach dem Brühen der Wurst und dem darauf folgenden Durchkühlen nicht mehr prall wie ein Naturdarm dem Wurstgut anliegen, sondern mehr oder minder faltig aussehen. Dieses faltige Aussehen wird vom Käufer mit alter, nicht mehr frischer Ware gleichgesetzt und wirkt daher verkaufshemmend. Aus diesem Grunde werden solche Wursthüllen aus thermoplastischen Kunststoffen bis heute von den Metzgern (Wurstherstellern) nur unter Vorbehalt für Waren zweiter Qualität verwendet. Zur Lösung dieses Problems sind bereits verschiedene Vorschläge gemacht worden: So wird in der DE-C-21 32 259 eine Vorrichtung zum Herstellen eines schrumpffähig verstreckten Schlauches aus thermoplastischem Kunststoff beschrieben. Dabei wird ein Schlauch aus vorzugsweise Polyamid 12 unter Erwärmen und geregeltem Wiederabkühlen mit Luft über einen Reckdorn gezogen und dabei längs verstreckt, während durch den Dorn die zu erwartende Querkontration verhindert wird. Die in diesen Hüllen hergestellten Würste sind nach dem Abkühlen über Nachtebenfalls faltig und müssen dann, um ein faltenfreies Aussehen zu erzielen, noch einmal für einige Sekunden in kochendes Wasser getaucht werden. Hierbei schrumpft die Hülle und legt sich annähernd faltenfrei an das Wurstgut an. Dieser zusätzliche Arbeitsgang passt jedoch nicht in den Arbeitsablauf einer rationellen Wurstproduktion und hat dazu geführt, daß diese Wursthülle keinen nennenswerten Eingang in die Praxis fand.

Weitere Versuche zur Lösung dieses Problems gingen von zweischichtigen Wursthüllen aus und nutzten das Phänomen des Trockenschrumpfes aus, welches dann auftritt, wenn feuchte hydrophile Folien getrocknet werden und sich dabei in allen Dimensionen kontrahieren. So wird in der DE-C-13 02 384 ein Verfahren zur Herstellung einer mehrschichtigen Wursthülle beschrieben, die aus einer Cellulosefaserschicht besteht, welche auf ihrer inneren, dem Wurstgut zugewandten Seite eine Beschichtung aus Polyvinylidenchlorid und auf der Außenseite eine Beschichtung mit Viskose aufweist. Die mit Viskose imprägnierte Cellulosefaserschicht quillt beim Anfeuchten und schrumpft dann beim Trocknen wieder. Dabei können so starke Schrumpfspannungen auftreten, daß bei nicht sachgemäßer sorgfältiger Behandlung die Würste platzen. Im Vergleich zu einer einschichtig extrudierten thermoplastischen Wursthülle ist die Herstellung eines Cellulosefaserdarms mit einer Innenbeschichtung aus Polyvinylidenchlorid dazu noch sehr kompliziert und teuer.

In der DE-C-23 58 560 wird die Herstellung einer zweischichtigen Wursthülle für Koch- und Brühwürste mit einer Innenschicht z.B. aus Polyamid 12 und einer Außenschicht aus Polyamid 6 beschrieben, wobei die Außenschicht einer Säurebehandlung unterworfen wird. Durch die Säurebehandlung wird das Wasseraufnahme- bzw. Quellvermögen der Außenschicht und damit gleichzeitig die beim Trocknen resultierende Schrumpfung vergrößert. Die Kombination einer stark quell- und damit schrumpffähigen Außenschicht mit einer wasserundurchlässigen innenliegenden Schicht führt durch den Trockenschrumpf der äußeren Schicht zu einer prall anliegenden Hülle. In der Praxis zeigte sich jedoch, daß die Schrumpfspannung der säurebehandelten quellfähigen Polymerschicht, die durch das Trocknen induziert werden kann, nicht stark genug ist. Durch die Säurebehandlung wird nämlich auch die mechanische Festigkeit der Außenschicht vermindert.

Eine Abwandlung dieser Wursthülle gemäß DE-C-23 58 560 wird in der DE-A-27 24 252 beschrieben: Anstatt eines durch Säurebehandlung quellfähig gemachten Polyamids 6 wird als Außenschicht eine Mischung von Polyamid 6 mit bevorzugt 5 bis 20 % Polyvinylalkohol verwendet. Diese Hüllen sollen eine sehr geringe Sauerstoffdurchlässigkeit besitzen und nach dem Auskühlen dem Wurstgut prall anliegen, haben jedoch ebenfalls bisher keinen Eingang in die Praxis gefunden und sind nicht im Handel erhältlich.

In der DE-A-28 50 182 wird erstmals eine Wursthülle beschrieben, die faltenfrei und prall dem Wurstgut anliegt, ohne daß ein zusätzlicher Arbeitsgang erforderlich ist und ohne daß auf eine zweischichtig aufgebaute Hülle zurückgegriffen werden muß. Es handelt sich hier um eine schrumpffähig multiaxial verstreckte und thermofixierte Wursthülle aus Polyamid, dessen Glaspunkt sich in Abhängigkeit von einer reversiblen Wasseraufnahme bis hin zu Minustemperaturen verschiebt. Hierdurch kann die Hülle nach dem Brühen beim Abduschen der Kontraktion des Wurstguts durch Schrumpfen folgen und daher prall bleiben.

Mit dieser Hülle wurde hinsichtlich Prallheit und Faltenfreiheit eine entscheidende Verbesserung erzielt, jedoch erweist sich diese Hülle in folgender Hinsicht noch als verbesserungsbedürftig: Die Hüllen weisen nicht in allen Fällen ihrer Anwendung eine ausreichende Weiterreißfestigkeit auf. So kommt es gelegentlich vor, daß die Hülle während des Anschneidens der prallen Wurst in Längsrichtung der Wurst weiter aufreißt. Wenn man die Wursthülle wie üblich spiralig abzupellen versucht, d.h. von einem vorbereiteten Einschnitt aus in der Umfangsrichtung einen Streifen bestimmter Breite abzureißen versucht, gelingt dies häufig nicht, vielmehr verläuft die Weiterreißrichtung in Längsrichtung der Wurst. Schließlich spielt die Weiterreißfestigkeit der Hülle bei vakuumverpackten Wurstwaren, insbesondere großkalibrigen Koch- und Brühwürsten, eine erhebliche Rolle. Die Koch- und Brühwürste werden heute bevorzugt in durch Schrägschnitt halbierter Form vakuumverpackt, um den Kunden eine visuelle Beurteilung der Ware zu ermöglichen. Während des Vakuumverpackens schräg angeschnittener Würste, dehnt sich die im porös koagulierten Wurstgut stets enthaltene Luft aufgrund des verringerten Außendrucks stark aus und belastet die Hülle insbesondere in der Umfangsrichtung. Eine beim Schrägschneiden der Wurst durch einen kleinen Längseinriß verletzte Hülle reißt daher bei unzureichender Weiterreißfestigkeit während des Vakuumverpackens weiter, in Einzelfällen ausgehend von der verletzten Stelle parallel zur Wurstlängsachse bis zum Wurstzipfel.

Darüber hinaus wäre es erwünscht, dem Verbraucher eine matte Wursthülle anzubieten, da die klassischen Wursthüllen aus Naturdarm oder Hautfaserdarm sowie auch Hüllen aus innenbeschichteter Cellulosefaser, eine ausgesprochen matte Oberfläche aufweisen. Der Verbraucher nimmt mitunter an, daß nur minderwertige Wurstware in glänzenden künstlichen Hüllen verpackt ist.

Eine Verbesserung der Weiterreißfestigkeit wird gemäß DE-A-28 50 181 dadurch erzielt, daß man statt der in der DE-A-28 50 182 verwendeten Polyamide, deren Glaspunkt sich in Abhängigkeit von der Wasseraufnahme zu tieferen Temperaturen verschieben lässt, zur Herstellung der Wursthülle eine Polymermischung aus diesen Polyamiden und modifizierten, polyamidverträglichen Polyolefinen, z.B. einem Ionomerharz, verwendet. Es liegt auf der Hand, daß es erwünscht wäre, eine solche Verbesserung der Weiterreißfestigkeit einschließlich der Erzielung einer matten Oberfläche ohne Zusatze, also ohne Verwendung eines Polymerblend, herstellen zu können.

Aufgabe der vorliegenden Erfindung ist es daher, ausgehend von der Schlauchfolie nach DE-A-28 50 182, diese Schlauchfolie so zu verbessern, daß sie sicher ohne Anrisse anzuschneiden, spiralig in Umfangsrichtung abzupellen, im Anschnitt zuverlässig vakuumverpackbar ist und gleichzeitig ein mattes Aussehen aufweist.

Diese Aufgabe wird durch eine Schlauchfolie gelöst, die

1. aus wenigstens einem Polyamid besteht, welches bis zur Sättigung mindestens 5 % seines Gewichts an Wasser aufnehmen kann und

2. vollständig thermofixiert ist und

3. folgendes elastisches Verhalten aufweist: Sie lässt sich bei Raumtemperatur in wassergesättigtem Zustand bei einer Innendruckbelastung zwischen 0 bis 0,6 bar nach der Gleichung $\Delta D = m \cdot p + c$ Innendruckbelastungsgerade (1) gleichmäßig zylindrisch aufweiten und bei anschließender Innendruckentlastung zwischen 0,6 bis 0 bar nach der Gleichung

$$\Delta D' = -m' \cdot p + c'$$

Innendruckentlastungsgerade (2) wieder zylindrisch kontrahieren, wobei bedeuten:

$\Delta D$ Kaliberaufweitungsdifferenz in (mm) bei Innendruckbelastung

$\Delta D'$ Kaliberkontraktionsdifferenz in (mm) bei Innendruckentlastung

m die Steigung der Innendruckbelastungsgeraden (1)

m' die Steigung der Innendruckentlastungsgeraden (2)

p der Innendruck in (bar)

c der Ordinatenabschnitt der Innendruckbelastungsgeraden (1) (c ist stets = 0.)

c' der Ordinatenabschnitt der Innendruckentlastungsgeraden (2)

und folgende Randbedingungen gelten:

1. die Absolutwerte für m und m' liegen zwischen 23 und 6, vorzugsweise zwischen 20 und 8 und besonders bevorzugt zwischen 17 und 11; für einen gegebenen Durchmesser unterscheiden sich die Absolutwerte für m und m' um nicht mehr als 20 %, vorzugsweise um nicht mehr als 11 % voneinander.

2. c' ist stets kleiner als 4,5 mm, vorzugsweise kleiner als 2,5 mm und besonders bevorzugt kleiner als 1,5 mm.

3. Die Gleichungen (1) und (2) gelten im Innendruckbereich zwischen 0 bis 0,6 bar bzw. zwischen 0,6 bis 0 bar.

Diese die Elastizität der erfindungsgemäßen Schlauchfolie definierenden Gleichungen sind samt ihren Randbedingungen aus folgenden Messungen abgeleitet:

50 cm lange Abschnitte des erfindungsgemäßen Folienschlauches werden einseitig luftdicht verschlossen und 1 Stunde in Wasser von ca. 20° C eingeweicht. Danach wird ein Abschnitt mit dem offenen Ende mit einer mit einem empfindlichen Manometer versehenen Druckluftquelle verbunden und von 0 bis 0,6 bar in 0,1-bar-Schritten mit Luftdruck belastet. Zu jedem Druckschritt p wird die

Kaliberaufweitungsdifferenz Δ D mittels einer Schieblehre gemessen. Nach Erreichen von 0,6 bar werden nunmehr in umgekehrter Reihenfolge die Wertepaare p und Δ D' gemessen. Die Messung wird mit mehreren Abschnitten wiederholt, um statistisch abgesicherte Werte zu erhalten.

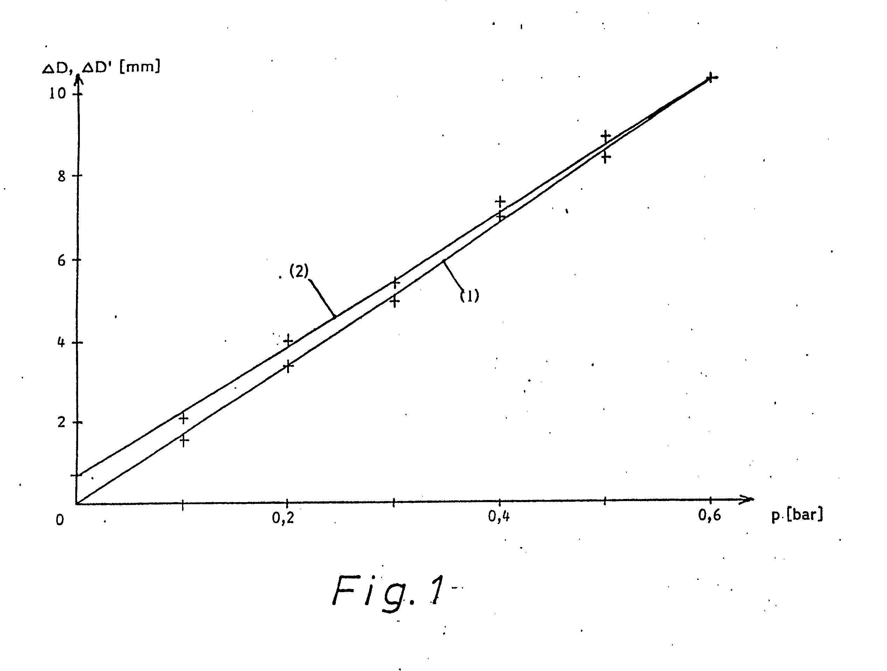

Fig. 1 zeigt ein typisches Meßdiagramm einer erfindungsgemäß besonders bevorzugten Schlauchfolie.

Es ist unschwer zu erkennen, daß die Innendruckbelastungsgerade (1) und die Innendruckentlastungsgerade (2) sich sowohl in Bezug auf ihre Steigungen m und m' als auc in Bezug auf ihre Ordinatenabschnitte c und c' nur sehr wenig voneinander unterscheiden.

Die erfindungsgemäße Schlauchfolie übersteht daher eine derartig hohe Innendruckbelastung ohne nennenswerte irreversible Dehnungen in Hüllenumfangsrichtung. Messungen haben ergeben, daß auch während des Füllens einer Wursthülle praxisübliche Innendruckbelastungen zwischen 0,35 bis 0,6 bar auftreten.

Demgemäß kann die erfindungsgemäße Hülle während des Füllvorgangs im Kaliber federartig aufgeweitet werden und verfügt über einen ausreichend großen Federweg, um auch nach der Auskühlung der hitzebehandelten Wurst diese faltenfrei zu umhüllen.

Der Federweg entspricht dabei der Kaliberaufweitungsdifferenz Δ D und die Federkonstante der Steigung m der Innendruckbelastungsgeraden (1).

Es hat sich gezeigt, daß nur diejenigen Schlauchfolien die Forderungen nach Faltenfreiheit und zuverlässigem Anschneiden bzw. Vakuumverpacken erfüllen, bei denen die oben aufgezählten Randbedingungen für m, m', p, c und c' in den angegebenen Bereichen liegen.

Wenn m kleiner als 6 ist, reicht z.B. der Fülldruck nicht aus, um genügend Federweg für die Faltenfreiheit sicherzustellen. Die Feder ist in diesem Fall zu starr.

Für m größer als 23 ist es dagegen nicht mehr möglich, die Hüllen währen des Füllvorgangs gleichmäßig zylindrisch aufzuweiten. Es treten partielle Ausbeulungen auf. Die Feder ist dann zu weich.

Bei deutlichen Unterschieden zwischen m und m' für die gleiche Hülle bzw. für c-Werte größer als 4,5 mm ist die Hülle nicht mehr dimensionsstabil. Sie wird dann während des Füllvorgangs bleibend gedehnt und ist nicht mehr faltenfrei.

In einer bevorzugten Ausführungsform besteht die Schlauchfolie aus einem Polyamid, welches in der α-Form kristallisieren kann.

Beispiele für Polyamide mit einem Mindestwasseraufnahmevermögen von 5 % bei Raumtemperatur in wassergesättigtem Zustand sind Polycaprolactam (PA 6), Polyhexamethylenadipamid (PA66), deren Copolymere und deren Mischungen. Besonders bevorzugt sind hiervon Polycaprolactam und Polyhexamethylenadipamid. Die vorstehenden Polyamide kristallisieren sämtlich in α-Form.

Die bevorzugte Wandstärke der Schlauchfolie beträgt 60 bis 100 μm, insbesondere 65 bis 80 μm. Sie weist eine Berstfestigkeit von mindestens 0,8 bar auf (bei Raumtemperatur und einer relativen Luftfeuchtigkeit im Bereich von 30 bis 75 %).

Die erfindungsgemäße Schlauchfolie wird nach einem ebenfalls zum Gegenstand der Erfindung gehörenden Verfahren durch Extrusion eines Primärschlauchs aus wenigstens einem Polyamid, welches bis zur Sättigung mindestens 5 Gew.% Wasser aufnehmen kann und nachfolgendes simultanes multiaxiales Verstrecken hergestellt, das dadurch gekennzeichnet ist, daß man die Schlauchfolie im Anschluß an das multiaxiale Verstrecken um mindestens 15 % und höchstens 40 %, bezogen auf ihre Dimensionen nach dem Verstrecken, in Längs- und Querrichtung kontrolliert schrumpfen lässt und vollständig thermofixiert.

Der zweite Verfahrensschritt, das multiaxiale Verstrecken, wird nach an sich bekannten Verfahren durchgeführt, wobei allerdings bestimmte Reckverhältnisse in Längs- und Querrichtung nicht unterschritten werden sollen. Das Längsreckverhältnis beträgt mindestens 1:2,3 bis 1:4, bevorzugt 1:2,7 bis 1:2,9, das Querreckverhältnis mindestens 1:2,5 bis 1:4,5, bevorzugt 1:3 bis 1:3,5.

Die nach dem multiaxialen Verstrecken erhaltene Schlauchfolie sollte eine Mindestwandstärke von zweckmäßig 30, bevorzugt 35 μm nicht unterschreiten.

Die kontrollierte multiaxiale Schrumpfung im Zug der Thermofixierung sollte, bezogen auf die Abmessungen der Schlauchfolie nach dem Verstrecken in Längs- und Querrichtung mindestens jeweils 15 % betragen, wobei Schrumpfungen in der Größenordnung von 20 % als Anhaltspunkt dienen können. Die Schrumpfung überschreitet im Regelfall 40 % nicht.

Kontrollierte Schrumpfung und vollständige Thermofixierung können nach einer Ausführungsform der Erfindung in einem Arbeitsgang vorgenommen werden. In diesem Fall werden kontrollierte Schrumpfung und vollständige Thermofixierung durch eine Hitzebehandlung von wenigstens 20 sek. und höchstens 240 sek. Dauer bewirkt. Die Dauer der Hitzebehandlung hängt von der Einwirkungstemperatur ab; sie ist um so kürzer, je höher die Temperatur ist. Behandlungsdauern von 240 sek. reichen im Regelfall aus. Die Hitzebehandlung kann gemäß einer Ausführungsform mit Heißwasser, Wasserdampf (Sattdampf) oder wenigstens 10 % Wasser enthaltenden mehrwertigen Alkoholen, bevorzugt Glycerin oder Propylenglycol vorgenommen werden. Die Temperatur eines solchen Wärmeübertragungsmediums beträgt mindestens 90 und höchstens 150°C. Alternativ kann die Hitzebehandlung mit Heißluft, einem erhitzten Inertgas, vorzugsweise $CO_2$ oder Stickstoff, oder mittels IR-Strahlung, die bevorzugt von IR-Strahlern mittlerer Wellenlänge emittiert wird, bei Temperaturen von nicht unter 180 °C und nicht über 320 °C vorgenommen werden. Auch hier liegt die Dauer der Hitzebehandlung bei mindestens 20 sek. Die Obergrenzen für Dauer der Hitzebehandlung und Behandlungstemperatur sind nur insoweit kritisch, als keinesfalls eine Schädigung des Kunststoffs der Folie auftreten darf. Bei höheren Behandlungstemperaturen kann dementsprechend die Behandlungsdauer kürzer sein. Bevorzugt wird das Thermofixiermedium Heißluft oder Schutzgas turbulent gegen die Schlauchfolie geblasen. Wird Schrumpfung und Thermofixierung mittels IR-Strahlung vorgenommen, so bevorzugt in einem mit IR-Strahlern ausgerüsteten Ofen. Nach einer weiteren Variante des Herstellungsverfahrens lässt man nach dem multiaxialen Verstrecken zunächst unter Wärmebeaufschlagung kontrolliert schrumpfen und vervollständigt die Thermofixierung anschließend in einem getrennten Schritt unter Beibehaltung der nach der Schrumpfung erreichten Dimensionen der Schlauchfolie. Dabei werden zur Vervollständigung der Thermofixierung bevorzugt höhere Temperaturen als bei der Schrumpfung angewandt.

Für diese zweistufige Arbeitsweise gelten die gleichen Schrumpfbedingungen wie bei der einstufigen Arbeitsweise, d.h. mindestens 15 % Schrumpfung in Längs- und Querrichtung. Die kontrollierte Schrumpfung führt man hierbei in Gegenwart von heißem Wasser oder Wasserdampf einer Temperatur von mindestens 90°C aus (die Obergrenze liegt hier bevorzugt bei 100°C), während dann in einem getrennten Schritt die Thermofixierung mit Heißluft, einem Schutzgas oder IR-Strahlung vervollständigt wird. Der erste Schritt bei dieser zweistufigen Arbeitsweise, d.h. also die kontrollierte Schrumpfung, bevorzugt in Gegenwart von Heißwasser oder Wasserdampf, benötigt eine Behandlungsdauer von wenigstens 20, bevorzugt wenigstens 30 sek. und höchstens 240 sek. bei einer Mindesttemperatur von 90°C. Für den zweiten Schritt, die Vervollständigung der Thermofixierung, hängt die Behandlungsdauer, wie auch in den anderen Fällen, von der Temperatur des Mediums ab. Letztere sollte nicht unter 180°C liegen. Man benötigt dann im Regelfall Behandlungsdauern von wenigstens 3, bevorzugt wenigstens 5 sek. So beträgt die Behandlungsdauer bei Verwendung von IR-Strahlung bei Strahlertemperaturen zwischen 180 bis 320°C 3 bis 10 sek und höchstens 240 sek.

Die Schlauchfolie kann gerade oder nach Art eines Kranzdarms gekrümmt sein.

Die erfindungsgemäße Schlauchfolie erfährt durch die multiaxiale Schrumpfung eine satte Oberflächenmattierung. Dieser erwünschte Effekt tritt völlig überraschend auf.

Eine weitere überraschende Eigenschaft der erfindungsgemäßen Schlauchfolie besteht darin, daß sie trotz vollkommen fehlender Schrumpffähigkeit unter 90°C imstande ist, Koch- und Brühwürste, die zwischen 70 und 87°C gegart und deren Durchmesser beim Füllen zweckmäßigerweise um 5 bis 15 % aufgeweitet werden, auch nach ihrer Auskühlung vollkommen faltenfrei zu umhüllen. Bisher war angenommen worden, daß nur schrumpffähige Kunststoff-Hüllen eine hitzebehandelte Wurst nach ihrer Auskühlung faltenfrei umhüllen.

Die Erfindung wird durch die folgenden Beispiele erläutert, ohne hierdurch den Schutzbereich einzuschränken.

**Beispiel 1**

Reines handelsübliches Polycaprolactam (mit einer relativen Viskosität von 4, gemessen an 1 g Granulat, gelöst in 100 ml 96%iger Schwefelsäure bei 25°C), wird in einem Einschneckenextruder bei 260°C plastifiziert und über eine Ringdüse zu einem Primärschlauch von 34 mm Durchmesser und 0,45 mm Wandstärke extrudiert und durch Kühlung verfestigt.

Anschließend wird der Primärschlauch auf 85°C erwärmt und mit Hilfe einer Sekundärblase simultan multiaxial verstreckt. Dabei werden folgende Reckverhältnisse eigehalten:

Querreckverhältnis 1 : 3
Längsreckverhältnis 1 : 3
Wanddickenverjüngung 9 : 1

Man erhält so eine multiaxial gereckte Schlauchfolie von 102 mm Durchmesser mit einer Wandstärke von 0,050 mm, die einen starken Oberflächenglanz aufweist und in hohen Maße schrumpffähig ist.

Sie wird im dritten nun folgenden Verfahrensschritt mit Hilfe einer Tertiärblase unter Zulassung eines Querschrumpfes von 21 % und eines Längsschrumpfes von 19 %, bezogen auf die Dimensionen der multiaxial verstreckten Schlauchfolie, durch Behandeln mit heißem Wasser von 98°C während einer Verweilzeit von 35 sec. multiaxial schrumpfend thermofixiert. So wird eine erfindungsgemäße Schlauchfolie erhalten, die einen Durchmesser von 80 bis 81 mm und eine Wandstärke von 0,070 mm hat.

Zum Schluß wird sie getrocknet und in aufgeblasenem Zustand unter Beibehaltung ihrer letzten Dimensionen 5 sec. lang durch einen mit IR-Strahlern mittlerer Wellenlänge bestückten, auf 212°C aufgeheizten Ofen geführt, dadurch total thermofixiert, anschliessend gekühlt, flachgelegt und aufgewickelt.

Diese so erhaltene erfindungsgemäße Folie ist unter 90°C nicht schrumpffähig. Sie ist nunmehr auf der Außenseite matt und so weiterreißfest, daß sie zur Wursthülle konfektioniert, mit Brühwurstbrät gefüllt, gebrüht und ausgekühlt, sicher angeschnitten und in halbierter Form zuverlässig vakuumverpackt werden kann. (Vergleiche Tabelle)

Außerdem umhüllt sie die ausgekühlte Brühwurst faltenfrei, wenn sie während des Füllvorgangs um ca.10 % auf einen Durchmesser von 88 bis 89 mm aufgeweitet wurde. Ihr elastisches, erfindungsgemäßes Verhalten ist in Abbildung 1 gezeigt.

**Beispiel 2**

Unter Beibehaltung aller im Beispiel 1 angegebenen Bedingungen und mit Polycaprolactam als Formmasse wurde eine multiaxial verstreckte Schlauchfolie erzeugt, die im dritten Verfahrensschritt an Stelle von Wasser mit Sattdampf von 100°C behandelt wurde. Die Folgeschritte waren denen des Beispiels 1 in jeder Beziehung gleich. Die nach dieser Verfahrensvariante erzeugte erfindungsgemäße Schlauchfolie wies die gleichen Eigenschaften wie die nach Beispiel 1 hergestellte Schlauchfolie auf.

**Beispiel 3**

Es wurde mit dem gleichen Polycaprolactam bis zum Verfahrensschritt 3 genau so verfahren, wie im Beispiel 1. Die kontrollierte Schrumpfthermofixierung wurde jedoch anstelle der Behandlung mit heißem Wasser mit Glycerin durchgeführt, das 14 bis 15 % Wasser enthielt und auf 120°C aufgeheizt war. Die Verweilzeit betrug 40 sec. Es wurden die gleichen Schrumpfwerte zugelassen wie im Beispiel 1. Im Anschluß daran wurde die Schlauchfolie durch Bespritzen mit Wasser vom Glycerin befreit, getrocknet, flachgelegt und aufgewickelt.

Die Folie war bereits total thermofixiert, so daß auf die Behandlung im IR-Strahler-Ofen verzichtet werden konnte. Die nach diesem Beispiel gewonnene Folie wies die gleichen Eigenschaften auf wie die Folien nach den Beispielen 1 und 2.

**Beispiel 4**

Reines handelsübliches Polyhexamethylenadipamid (PA 66) mit einer relativen Viskosität von 3,6 gemessen an 1 g Granulat, gelöst in 100 ml 96%iger Schwefelsäure bei 25°C, wird in einem Einschneckenextruder bei 280°C plastifiziert und über eine Ringdüse zu einem Primärschlauch von 34 mm Durchmesser und 0,45 mm Wandstärke extrudiert und durch Kühlen verfestigt.

Der Primärschlauch wird nach Erwärmen auf 95°C simultan multiaxial verstreckt. Dabei werden folgende Reckverhältnisse eingehalten:.
Querreckverhältnis 1 : 3,2
Längsreckverhältnis 1 : 2,8
Wanddickenverjüngung ca. 9 : 1
Man erhält eine hochverstreckte Schlauchfolie mit ca. 109 mm Durchmesser und 0,050 mm Wandstärke. Diese Folie wird dann mit Hilfe einer Tertiärblase mit heißem Wasser von 98°C 35 sec. lang behandelt, wobei ein Längsschrumpf von 19 % und ein Querschrumpf von 21 % zugelassen werden.

So wird eine erfindungsgemäße Schlauchfolie erhalten, die einen Durchmesser von 86 mm und eine Wandstärke von 0,070 mm hat.

Diese wird im Anschluß an die Schrumpfthermofixierung und im aufgeblasenen Zustand unter Beibehaltung ihrer letzten Dimension 5 sec lang durch den auf 235°C aufgeheizten IR-Ofen geführt, dadurch total thermofixiert, anschließend gekühlt, flachgelegt und aufgewickelt.

Die nach diesem Verfahren hergestellte erfindungsgemäße Polyhexamethylenadipamid-Folie ist unter 90°C nicht schrumpffähig, aussenseitig ausgesprochen matt und so weiterreißfest, daß sie sicher angeschnitten und in halbierter Form zuverlässig vakuumverpackt werden kann.(Vgl. Tabelle)

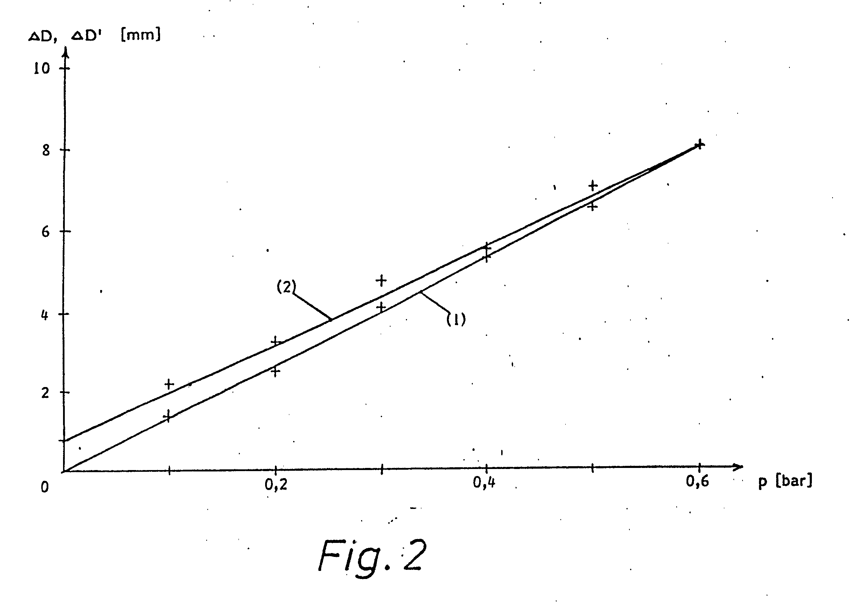

Außerdem umhüllt sie die ausgekühlte Brühwurst faltenfrei, wenn sie während des Füllvorgangs um ca. 7 % auf einen Durchmesser von 92 mm aufgeweitet wurde. Ihr elastisches erfindungsgemäßes Verhalten ist in der Abb. 2 aufgezeigt.

**Vergleichsbeispiel 1**

Das gleiche Polycaprolactam wie im Beispiel 1 wird unter den dort angegebenen Bedingungen extrudiert und multiaxial verstreckt.

Abweichend vom erfindungsgemäßen Verfahren wird die Schlauchfolie durch Anblasen mit Warmluft von 160°C und unter Beibehaltung ihrer Reckdimensionen (also ohne jeglichen Längs- und Querschrumpf und infolgedessen ohne Wandstärkenzunahme) 8 sek. thermofixiert, abgekühlt, flachgelegt und aufgewickelt.

Man erhält so eine Schlauchfolie von 102 mm Durchmesser und 0,050 mm Wandstärke, die in 78°C warmes Wasser eingetaucht innerhalb von 2 sec. um 16% quer- und um 18% längsschrumpft, außerdem eine stark glänzende äussere Oberfläche aufweist und sich auch bei weitem nicht so sicher anschneiden und in halbierter Form vakuumverpacken läßt wie die Hüllen der Beispiele 1 bis 4. (Vgl. Tabelle)

**Vergleichsbeispiel 2**

Polyamid 6,9, welches bevorzugt Kristalle in der γ-Form bildet und bei Raumtemperatur in wassergesättigtem Zustand lediglich 3 % Wasser aufnimmt, mit einer relativen Viskosität von 3,3 gemessen an 1 g Granulat in 100 ml 96%iger Schwefelsäure bei 25°C, wird in einem Einschnekkenextruder bei 255°C plastifiziert und über eine Ringdüse zu einem primärschlauch von 34 mm Durchmesser und 0,45 mm Wandstärke extrudiert und durch Kühlung verfestigt.

Dieser Primärschlauch wird im Anschluß daran genau so behandelt wie im erfindungsgemäßen Beispiel 1, wobei alle Verfahrensparameter dieselben sind wie im erfindungsgemässen Beispiel 1.

Es wird so eine Polyhexamethylennonanamid-Schlauchfolie erhalten, die unter 90°C nicht schrumpft, eine relativ matte äussere Oberfläche aufweist und auch in Bezug auf Anschneidesicherheit und zuverlässiges Vakuumverpacken alle Anforderungen erfüllt, die jedoch, wie man aus der Abb.3 erkennen kann, so starr ist, daß sie ausgekühlte Brühwürste nicht mehr faltenfrei umhüllen kann (m-Wert zu niedrig).

Außerdem wird diese Hülle, weil sie bevorzugt Kristalle der γ-Form und nicht der α-Form bildet, während des Brühprozesses leichter bleibend deformiert als die erfindungsgemäßen Hüllen.

Der zu kurze Federweg dieser PA 6,9-Hülle ist eine Folge von unzureichender Wasseraufnahmefähigkeit (unter 5 %!) bei Raumtemperatur in wassergesättigtem Zustand.

In der folgenden Tabelle sind die erfindungswesentlichen Kriterien anhand der Beispiele zusammengefasst.

## TABELLE

| Beispiele / Eigenschaften | Formmasse | (1) Wasseraufnahme (%) | Kristallform | (2) Oberflächen-glanz | (3) Anschneide-sicherheit (%) | (4) Vakuums-verpackungs-sicherheit | (5) Falten-bildung |
|---|---|---|---|---|---|---|---|
| Beispiel 1 erfindungsgemäß | PA 6 | 11 | α | 11 | 92 | 196 | ohne Falten |
| Beispiel 4 (erfindungsgemäß) | PA 6,6 | 9 | α | 9 | 96 | 196 | ohne Falten |
| Vergleichsbeispiel 1 | PA 6 | 11 | α | 35 | 47 | 94 | ohne Falten |
| Vergleichsbeispiel 2 | PA 6,9 | 3 | γ | 18 | 87 | 180 | faltig |

(1) Wasseraufnahme (%) bei Raumtemperatur durch Lagerung im Wasser bis zur Sättigung.

(2) Oberflächenglanzmessung nach DIN 67530 - Einstrahlungswinkel 60°, Normlicht C (künstliches Tageslicht), 100° Skala.

(3) Anschneidesicherheit (%) wurde ermittelt durch Anschneiden von jeweils 100 ausgekühlten Brühwürsten mit einem praxisüblichen scharfen Messer unter Praxisbedingungen. Angegeben ist die Anzahl der Brühwürste, die das An-schneiden ohne Verletzung der Wursthülle in Längsrichtung überstanden haben.

(4) Vakuumverpackungssicherheit: Die nach dem Anschneidetest erhaltenen Wursthälften (200 Stück für jedes Beispiel) wurden in dem handelsüblichen Vakuumkammergerät 'Auto-Vac Type AVQ' der Fa.Krämer & Grebe BRD bis zum Vollan-schlag des Manometers ( ≙ 100 % Vakuum) evakuiert und vakuumverpackt. In der Tabelle ist jeweils die Anzahl der Wursthälften angegeben, die diesen Prozeß ohne Längsdurchriß der Wursthülle bis zum Wurstzipfel überstanden haben.

(5) Wurde nach Auskühlen der Brühwürste (jeweils 100 Stück) visuell beurteilt. Nur bei Vergleichsbeispiel 2 wurde deutliche Längsfaltenbildung festgestellt.

## Patentansprüche

1. Einschichtige Schlauchfolie aus wenigstens einem Polyamid, welches bis zur Sättigung mindestens 5 % seines Gewichts an Wasser aufnehmen kann, zur Verpackung und Umhüllung von pastösen Lebensmitteln, insbesondere Lebensmitteln, die heiß verpackt oder nach dem Abpacken einer Hitzebehandlung unterworfen werden, dadurch gekennzeichnet, daß die Schlauchfolie vollständig thermofixiert ist und folgendes elastisches Verhalten aufweist:

Sie läßt sich bei Raumtemperatur in wassergesättigtem Zustand bei einer Innendruckbelastung zwischen 0 bis 0,6 bar nach der Gleichung

$\Delta D = m \cdot p + c$ Innendruckbelastungsgerade (1) gleichmäßig zylindrisch aufweiten und bei anschliessender Innendruckentlastung zwischen 0,6 bis 0 nach der Gleichung

$\Delta D' = m' \cdot p + c'$ Innendruckentlastungsgerade (2) wieder zylindrisch kontrahieren, wobei bedeuten:

$\Delta D$ Kaliberaufweitungsdifferenz in (mm) bei Innendruckbelastung

$\Delta D'$ Kaliberkontraktionsdifferenz in (mm) bei Innendruckentlastung

m die Steigung der Innendruckbelastungsgeraden (1)

m' die Steigung der Innendruckentlastungsgeraden (2)

p der Innendruck in (bar)

c der Ordinatenabschnitt der Innendruckbelastungsgeraden (1) (c ist stets = 0.)

c' der Ordinatenabschnitt der

Innendruckentlastungsgeraden (2) und folgende Grenzbedingungen gelten:

1. die Absolutwerte für m und m' liegen zwischen 23 und 6, vorzugsweise zwischen 20 und 8 und besonders bevorzugt zwischen 17 und 11; für einen gegebenen Durchmesser unterscheiden sich die Absolutwerte für m und m' um nicht mehr als 20 %, vorzugsweise um nicht mehr als 11 % voneinander.

2. c' ist stets kleiner als 4,5 mm, vorzugsweise kleiner als 2,5 mm und besonders bevorzugt kleiner als 1,5 mm.

3. Die Gleichungen (1) und (2) gelten im Innendurckbereich zwischen 0 bis 0,6 bar bzw. zwischen 0,6 bis 0 bar.

2. Schlauchfolie nach Anspruch 1, dadurch gekennzeichnet, daß sie aus einem Polyamid besteht, welches in der α-Form kristallieren kann.

3. Schlauchfolie nach einem der Ansprüche 1 bis 2, dadurch gekennzeichnet, daß sie aus Polycaprolactam, Polyhexamethylenadipamid, Mischungen von Polycaprolactam und Polyhexamethylenadipamid und/oder Copolyamiden aus Caprolactam, Hexamethylendiamin und Adipinsäure besteht.

4. Schlauchfolie nach einem der Ansprüche 1 bis 3, dadurch gekennzeichnet, daß sie gerade oder nach Art eines Kranzdarms gekrümmt ist.

5. Schlauchfolie nach einem der Ansprüche 1 bis 4, gekennzeichnet durch eine Wandstärke von 0,06 bis 0,10 mm, bevorzugt 0,065 bis 0,08 mm.

6. Schlauchfolie nach einem der Ansprüche 1 bis 5, gekennzeichnet durch eine Berstdruckfestigkeit von mindestens 0,8 bar.

7. Verfahren zur Herstellung einer Schlauchfolie nach Ansprüchen 1 bis 6 durch Extrusion eines Primärschlauchs aus wenigstens einem Polyamid, welches bis zur Sättigung mindestens 5 Gew.-% Wasser aufnehmen kann und nachfolgendes simultanes, multiaxiales Verstrecken, dadurch gekennzeichnet, daß man die Schlauchfolie im Anschluß an das multiaxiale Verstrecken um mindestens 15 % und höchstens 40 %, bezogen auf ihre Dimensionen nach dem Verstrecken, in Längs- und Querrichtung kontrolliert schrumpfen lässt und vollständig thermofixiert.

8. Verfahren nach Anspruch 7, dadurch gekennzeichnet, daß man bei der multiaxialen Verstreckung ein Längsreckverhältnis von 1:2,3 bis 1:4, bevorzugt 1:2,7 bis 1:2,9 und ein Querreckverhältnis von 1:2,5 bis 1:4,5, bevorzugt 1:3 bis 1:3,5 anwendet.

9. Verfahren nach einem der Ansprüche 7 bis 8, dadurch gekennzeichnet, daß man kontrollierte Schrumpfung und vollständige Thermofixierung in einem Arbeitsgang vornimmt.

10. Verfahren nach einer der Ansprüche 7 bis 9, dadurch gekennzeichnet, daß man kontrollierte Schrumpfung und vollständige Thermofixierung durch eine Hitzebehandlung der Schlauchfolie von mindestens 20 und höchstens 240 sek. Dauer vornimmt.

11. Verfahren nach einem der Ansprüche 7 bis 10, dadurch gekennzeichnet, daß man die Hitzebehandlung mit Heißwasser, Wasserdampf oder wenigstens 10 % Wasser enthaltenden mehrwertigen Alkoholen, bevorzugt Glycerin oder Propylenglycol, bei Temperaturen von mindestens 90 und höchstens 150°C vornimmt.

12. Verfahren nach einem der Ansprüche 7 bis 10, dadurch gekennzeichnet, daß man die Hitzebehandlung mit Heißluft, einem erhitzten Schutzgas, vorzugsweise $CO_2$ oder Stickstoff oder mittels IR-Strahlung bei Temperaturen von nicht unter 180°C und nicht über 320°C vornimmt.

13. Verfahren nach Anspruch 12, dadurch gekennzeichnet, daß man die Heißluft oder die erhitzten Schutzgase turbulent gegen die Schlauchfolie strömen läßt.

14. Verfahren nach Anspruch 12, dadurch gekennzeichnet, daß man die Hitzebehandlung mittels mittelwelligen IR-Strahlern in einem Ofen vornimmt.

15. Verfahren nach einem der Ansprüche 7 bis 8, dadurch gekennzeichnet, daß man zunächst kontrolliert schrumpfen lässt und anschliessend unter Beibehaltung der nach der Schrumpfung erreichten Dimensionen in einem getrennten Schritt vollständig thermofixiert.

16. Verfahren nach Anspruch 15, dadurch gekennzeichnet, daß man die Thermofixierung bei höheren Temperaturen als der Schrumpfungstemperatur vervollständigt.

17. Verfahren nach einem der Ansprüche 15 bis 16, dadurch gekennzeichnet, daß man die kontrollierte Schrumpfung in Gegenwart von heißem Wasser oder Wasserdampf einer Temperatur von mindestens 90 bis 100°C während mindestens 20 bis 240 sek. vornimmt.

18. Verfahren nach einem der Ansprüche 16 bis 17, dadurch gekennzeichnet, daß man im Anschluß an die multiaxiale Schrumpfung die Thermofixierung mittels Heißluft, erhitzten Schutzgasen, bevorzugt $CO_2$ oder Stickstoff oder mittels IR-Strahlung bei Temperaturen von nicht unter 180 und nicht mehr als 320°C und Verweilzeiten von nicht unter 3, bevorzugt nicht unter 5 und maximal 240 sek. vervollständigt.

19. Verfahren nach einem der Ansprüche 7 bis 18, dadurch gekennzeichnet, daß man eine Schlauchfolie einer Mindestwandstärke von 35 µm der multiaxialen Schrumpfung und Thermofixierung unterwirft.

## Claims

1. A single layer tubular film of at least one polyamide which can absorb at least 5% of its weight in water up to saturation for packing and casing foodstuffs in paste form, especially foodstuffs that are packed when hot or are subject to heat treatment after packing, characterized in that the tubular film is totally thermally fixed and shows the following elastic behaviour:

At room temperature, when saturated with water, at an internal pressure between 0 and 0.6 bar according to the equation

$$D = m \times p + c$$ it will expand cylindrically and evenly according to internal pressurization line (1) and when the internal pressure is released to between 0.6 and 0 bar according to the equation

$$D' = m' \times p + c'$$ it will contract cylindrically and according to internal pressure release line (2), wherein

D is the difference in diameter expansion in (mm) during internal pressurization

D' is the difference in diameter contraction in (mm) during internal pressure release

m is the upward slope of the internal pressurization line (1)

m' is the upward slope of the internal pressure release line (2)

p is the internal pressure in (bar)

c is the ordinate sector of the internal pressurization line (1)

(c is always = 0)

c' is the ordinate sector of the internal pressure release line (2)

with the following limiting conditions:

1. the absolute values for m and m' lie between 23 and 6, preferably between 20 and 8 and especially preferred between 17 and 11, for a given diameter the values for m and m' vary by no more than 20%, preferably by no more than 11%.

2. c' is always less than 4,5 mm, preferably less than 2,5 mm and especially preferred less than 1,5 mm.

3. the equations (1) and (2) apply in the internal pressure range between 0 to 0.6 bar, respectively.

2. Tubular film according to claim 1, characterized in that the film consists of a polyamide than can crystallize in the α-form.

3. Tubular film according to claim 1 or 2, characterized in that the film consists of polycaprolactam, polyhexamethyleneadipamide, mixtures of polycaprolactam and polyhexamethyleneadipamide and/or copolyamides of caprolactam and Hexamethylenediamine and adipic acid.

4. Tubular film according to claims 1, 2 or 3, characterized in that the film is straight or curved in the manner of a wreath-shaped casing.

5. Tubular film according to claims 1, 2, 3 or 4, characterized in that the film has a wall thickness of 0.06 to 0.10 mm, preferably of 0.065 to 0.08 mm.

6. Tubular film according to claims 1, 2, 3, 4 or 5, characterized in that the film has a bursting strength of a least 0.8 bar.

7. A process for the production of a tubular film according to claims 1, 2, 3, 4, 5 or 6 comprising the extrusion of a primary tube of at least one polyamide which can absorb at least 5% of its weight in water up to saturation and subsequent simultaneous multiaxial stretching, characterized in that the film, subsequent to the multiaxial stretching, is permitted to shrink in the transvers and longitudinal directions by at least 15% and at most 40% relating to the dimensions after stretching, under controlled conditions, and is totally thermally fixed.

8. Process according to claim 7, characterized in that during the multiaxial stretching a longitudinal stretch ratio of 1 : 2,3 to 1 : 4, preferably of 1 : 2,7 to 1 : 2,9 and a transverse stretch ratio of 1 : 2,5 to 1 : 4,5, preferably of 1 :3 to 1 : 3.5 is used.

9. Process according to claims 7 or 8, characterized in that controlled shrinkage and complete thermal fixing are completed in one stage.

10. Process according to claims 7, 8 or 9, characterized in that controlled shrinkage and complete thermal fixing is undertaken by thermal treatment of the tubular film for at least 20 and at most 240 seconds.

11. Process according to claims 7, 8, 9 or 10, characterized in that the thermal treatment is carried out using hot water, steam, or a heated polyvalent alcohol that contains at least 10% water, preferably glycerol or propylene glycol, at temperatures of at least 90 and at most 150°C.

12. Process according to claims 7, 8, 9 or 10, characterized in that the heat treatment is carried out using hot air, a heated inert gas, preferably $CO_2$ or nitrogen, or by means of IR-irradiation at temperatures of not less than 180°C and not above 320°C.

13. Process according to claim 12, characterized in that the hot air or the heated inert gases are allowed to flow turbulently against the tubular film.

14. Process according to claim 12, characterized in that the thermal treatment is carried out using medium-wave IR radiators in an oven.

15. Process according to claims 7 or 8, characterized in that after the multiaxial stretching thermal fixing is carried out initially during controlled shrinkage, the thermal fixing being completed in a separate stage while maintaining the dimensions achieved after the shrinking.

16. Process according to claim 15, characterized in that the thermal fixing is completed at higher temperatures than the shrinking temperatures.

17. Process according to claims 15 or 16, characterized in that the controlled shrinkage is carried out in the presence of hot water or steam at a temperature of at least 90 to 100°C for at least 20 to 240 seconds.

18. Process according to claims 16 or 17, characterized in that subsequent to the multiaxial stretching, the thermal fixing is completed by means of hot air, heated inert gases, preferably $CO_2$ or nitrogen, or IR irradiation at temperatures of not less than 180°C and not more than 320°C, for periods of not less than 3 seconds, preferably not less than 5 seconds, and for a maximum of 240 seconds.

19. Process according to either one of claims 7 to 18, characterized in that a tubular film having a minimum wall thickness of 35 μm is subjected to multiaxial shrinkage and thermal fixing.

## Revendications

1. Gaine tubulaire à une seule couche pour emballer ou envelopper des produits alimentaires pâteux, notamment des produits alimentaires emballés à chaud ou soumis après l'emballage à un traitement thermique, formée d'au moins un polyamide capable d'absorber au moins 5% de son poids d'eau avant d'être saturé, caractérisée en ce qu'elle est complètement thermofixée et qu'elle possède un comportement élastique tel qu'à la température normale et à l'état saturé en eau, elle peut subir, sous une pression intérieure de 0 à 0,6 bar, un élargissement cylindrique uniforme d'après l'équation

$\Delta D = m. p + c$ droite de contrainte de pression intérieure (1),

et à la détente subséquente de la pression de 0,6 à 0 une contraction cylindrique d'après l'équation

$\Delta D' = -m'. p + c'$ droite de détente de la pression interne (2),

où

$\Delta D$ = la différence (en mm) des calibres à l'élargissement et

$\Delta D'$ = la différence (en mm) des calibres à la détente,

$m$ = l'inclinaison de la droite de contrainte de pression intérieure (1),

$m'$ = l'inclinaison de la droite de détente de la pression interne (2),

$p$ = la pression intérieure (en bar),

$c$ = l'ordonnée de la droite de contrainte de pression intérieure (1) au départ (c est toujours égal à 0) et

$c'$ = l'ordonnée de départ de la droite de détente de la pression interne (2),

avec les conditions extrêmes ci-après :

1) les valeurs absolues pour m et m' se situent entre 23 et 6, de préférence entre 20 et 8 et plus particulièrement entre 17 et 11; pour un diamètre donné, la différence entre les valeurs absolues pour m et m' ne dépasse pas 20 % et de préférence pas 11 %;

2) c'est toujours inférieur à 4,5 mm, de préférence inférieur à 2,5 mm et en particulier inférieur à 1,5 mm;

3) les équations (1) et (2) valent pour la gamme de pressions intérieures de 0 à 0,6 et de 0,6 à 0 bar respectivement.

2. Gaine suivant la revendication 1, caractérisée en ce qu'elle est formée en un polyamide capable de cristalliser dans la forme α.

3. Gaine suivant l'une des revendications 1 et 2, caractérisée en ce qu'elle est formée en polycaprolactame, polyhexaméthylène-adipamide, en un mélange de polycaprolactame et de polyhexaméthylène-adipamide et (ou) en un copolyamide de caprolactame, d'hexaméthylène-diamine et d'acide adipique.

4. Gaine suivant l'une des revendications 1 à 3, caractérisée en ce qu'elle est droite ou enroulée à la manière d'un boyau à boudin.

5. Gaine suivant l'une des revendications 1 à 4, caractérisée en ce que sa paroi possède une épaisseur de 0,06 à 0,10 et de préférence de 0,065 à 0,08 mm.

6. Gaine suivant l'une des revendications 1 à 5, caractérisée en ce qu'elle possède une résistance à l'éclatement d'au moins 0,8 bar.

7. Procédé de fabrication d'une gaine tubulaire suivant les revendications 1 à 6 par extrusion d'un tube primaire en au moins un polyamide, capable d'absorber au moins 5% de son poids d'eau avant d'être saturé, suivie d'un étirage multi-axial simultané, caractérisé en ce que, après l'étirage multi-axial, on laisse la gaine se contracter au moins de 15% et au plus de 40% de ses dimensions à l'état étiré dans la direction longitudinale aussi bien que transversale, puis on la soumet à une thermo-fixation complète.

8. Procédé suivant la revendication 7, caractérisé en ce que, lors de l'étirage multi-axial, le rapport d'étirage longitudinal est compris entre 1:2,3 et 1:4 et de préférence entre 1:2,7 et 1:2,9 et le rapport d'étirage transversal entre 1:2,5 et 1:4,5 et de préférence entre 1:3 et 1:3,5.

9. Procédé suivant l'une des revendications 7 et 8, caractérisé en ce que la contraction contrôlée et la thermo-fixation complète sont réalisées dans un seul stade opératoire.

10. Procédé suivant l'une des revendications 7 à 9, caractérisé en ce que la contraction contrôlée et la thermo-fixation complète sont provoquées par un traitement thermique de la gaine tubulaire d'une durée d'au moins 20 secondes, mais ne dépassant pas 240 secondes.

11. Procédé suivant l'une des revendications 7 à 10, caractérisé en ce que le traitement thermique est réalisé à l'aide d'eau chaude, de vapeur d'eau ou d'un alcool polyfonctionnel, en particulier la glycérine ou le propylène-glycol, contenant au moins 10 % d'eau, à des températures d'au moins 90°C, mais ne dépassant pas 150°C.

12. Procédé suivant l'une des revendications 7 à 10, caractérisé en ce que le traitement thermique est réalisé à l'aide d'air chaud, d'un gaz protecteur, en particulier du $CO_2$ ou de l'azote, chauffé ou d'un rayonnement infra-rouge, à des températures d'au moins 180°C, mais ne dépassant pas 320°C.

13. Procédé suivant la revendication 12, caractérisé en ce que l'air chaud ou le gaz protecteur chauffé est dirigé en courant turbulent sur la gaine tubulaire.

14. Procédé suivant la revendication 12, caractérisé en ce que le traitement thermique est réalisé dans un four à l'aide de lampes à infra-rouge émettant dans la gamme des ondes moyennes.

15. Procédé suivant l'une des revendications 7 et 8, caractérisé en ce que l'on soumet d'abord à la contraction contrôlée, puis l'on provoque dans une opération séparée la thermo-fixation complète dans des conditions conservant les dimensions obtenues à la contraction.

16. Procédé suivant la revendication 15, caractérisé en ce que la thermo-fixation est complétée à une température supérieure à la température de contraction.

17. Procédé suivant l'une des revendications 15 et 16, caractérisé en ce que la contraction contrôlée est réalisée à l'aide d'eau chaude ou de vapeur d'eau d'une température d'au moins 90 à 100°C, la durée du traitement étant comprise entre 20 et 240 secondes.

18. Procédé suivant l'une des revendications 16 et 17, caractérisé en ce que la contraction multi-axiale est suivie d'une thermo-fixation à l'aide d'air chaud, d'un gaz protecteur, en particulier du $CO_2$ ou de l'azote, chauffé ou d'un rayonnement infra-rouge à des températures d'au moins 180°, mais ne dépassant pas 320°C, la durée de ce traitement étant au moins égale à 3 s et de préférence à 5 s, mais ne dépassant pas 240 s.

19. Procédé suivant l'une de s revendications 7 à 18, caractérisé en ce que la gaine tubulaire soumise à la contraction multi-axiale et à la thermo-fixation possède une paroi d'une épaisseur d'au moins 35 μ.

Fig. 1

Fig. 2